# EUROPÄISCHE PATENTSCHRIFT

(11) **EP 3 177 190 B1**
(45) Veröffentlichungstag und Bekanntmachung des Hinweises auf die Patenterteilung: **03.10.2018**
(21) Anmeldenummer: 15745488.5
(22) Anmeldetag: 03.08.2015
(51) Int. Cl.: A47J 31/60

(54) **ZUFÜHREINHEIT ZUM ZUFÜHREN EINES FLÜSSIGEN LEBENSMITTELS ZU EINER GETRÄNKEAUSGABEVORRICHTUNG UND VERFAHREN ZUM REINIGEN ZUMINDEST EINER ZUFÜHREINHEIT ZUM ZUFÜHREN EINES FLÜSSIGEN LEBENSMITTELS ZU EINER GETRÄNKEAUSGABEVORRICHTUNG**
FEED UNIT FOR FEEDING A LIQUID FOODSTUFF TO A BEVERAGE DISPENSING DEVICE AND METHOD FOR CLEANING AT LEAST ONE FEED UNIT FOR FEEDING A LIQUID FOODSTUFF TO A BEVERAGE DISPENSING DEVICE
UNITÉ D'ALIMENTATION DESTINÉE À INTRODUIRE UN ALIMENT LIQUIDE DANS UN DISTRIBUTEUR DE BOISSONS ET PROCÉDÉ DE NETTOYAGE D'AU MOINS UNE UNITÉ D'ALIMENTATION DESTINÉE À INTRODUIRE UN ALIMENT LIQUIDE DANS UN DISTRIBUTEUR DE BOISSONS

(30) Priorität: 07.08.2014 DE 102014215689
(43) Veröffentlichungstag der Anmeldung: 14.06.2017
(73) Patentinhaber: FRANKE Kaffeemaschinen AG, 4663 Aarburg (CH)
(72) Erfinder: TURI, Mariano, CH-8046 Zürich (CH); VETTERLI, Heinz, CH-8855 Wangen (CH)
(74) Vertreter: Lemcke, Brommer & Partner Patentanwälte Partnerschaft mbB
(86) Internationale Anmeldenummer: PCT/EP2015/067792
(87) Internationale Veröffentlichungsnummer: WO 2016/020314

(56) Entgegenhaltungen:
- EP-A1- 2 078 481

## Beschreibung

Die Erfindung betrifft eine Zuführeinheit zum Zuführen eines flüssigen Lebensmittels zu einer Getränkeausgabevorrichtung gemäß Oberbegriff des Anspruchs 1 sowie ein Verfahren zum Reinigen zumindest einer Zuführeinheit zum Zuführen eines flüssigen Lebensmittels zu einer Getränkeausgabevorrichtung gemäß Oberbegriff des Anspruchs 11.

Vorrichtungen zur Ausgabe von Getränken weisen typischerweise eine Zuführeinheit zum Zuführen eines flüssigen Lebensmittels auf. Diese werden häufig verwendet, um flüssige Zusatzstoffe der Getränkeausgabevorrichtung zuzuführen, insbesondere, um die Zusatzstoffe zur Zubereitung eines Mischgetränks zur Verfügung zu stellen. Beispielsweise finden Zuführeinheiten zum Zuführen von Milch und/oder anderen flüssigen Geschmacksstoffen wie beispielsweise Sirup bei Kaffeemaschinen Anwendung, um das flüssige Lebensmittel zusammen mit Kaffee auszugeben oder nach Weiterverarbeitung des flüssigen Lebensmittels, wie beispielsweise Aufschäumen von Milch, einem Kaffeegetränk hinzuzufügen.

Solche Vorrichtungen müssen regelmäßig gereinigt werden, um die hygienischen Standards zu gewährleiten und Ablagerungen zu verhindern. Insbesondere bei der Verwendung solcher Vorrichtungen in Großbetrieben ist eine regelmäßige, meist tägliche Reinigung bei vorgegebenen Standards vorgeschrieben.

Aus EP 2 078 481 ist ein Reinigungsmittel bekannt, welches einen Reinigungsmittelbehälter, eine Dosierpumpe und eine Ausgabekammer umfasst und zur Reinigung an oder in einer Kaffeemaschine angeordnet wird.

Aus DE 20 2010 010 509 U1 ist eine Maschine zur Herstellung von Kaffeemischgetränken bekannt, welche eine Dosiervorrichtung, einen Reinigungsbehälter und eine Ausgabekammer zum Mischen des Reinigungsmittels mit Wasser aufweist.

Der vorliegenden Erfindung liegt die Aufgabe zugrunde, die Reinigung einer Zuführeinheit zum Zuführen eines flüssigen Lebensmittels zu einer Getränkeausgabevorrichtung für den Benutzer zu vereinfachen und hierbei Fehlermöglichkeiten beim Reinigungsvorgang zu verringern.

Gelöst ist diese Aufgabe durch eine Zuführeinheit gemäß Anspruch 1 sowie ein Verfahren zum Reinigen mindestens einer Zuführeinheit gemäß Anspruch 11. Hiermit wird der Wortlaut sämtlicher Ansprüche in die Beschreibung einbezogen.

Die erfindungsgemäße Zuführeinheit ist vorzugsweise zur Durchführung des erfindungsgemäßen Verfahrens, insbesondere einer bevorzugten Ausführungsform hiervon, ausgebildet. Das erfindungsgemäße Verfahren ist vorzugsweise zur Durchführung mittels einer erfindungsgemäßen Zuführeinheit, insbesondere einer bevorzugten Ausführungsform hiervon, ausgebildet.

Die erfindungsgemäße Zuführeinheit zum Zuführen eines flüssigen Lebensmittels zu einer Getränkeausgabevorrichtung weist eine Zuführleitung zum Zuführen des flüssigen Lebensmittels aus einem Lebensmittelbehälter zu der Zuführeinheit und einen Reinigungsbehälter für ein Reinigungsmittel sowie eine Reinigungsmittelpumpe zum Fördern des Reinigungsmittels aus dem Reinigungsmittelbehälter auf.

Wesentlich ist, dass die Vorrichtung einen Reinigungsmittelmischbehälter aufweist, welcher wahlweise in einem Reinigungsmodus an oder in der Zuführeinheit anordbar und in einem Lebensmittelausgabemodus von der Zuführeinheit entfernbar ist. Bei einem typischen Betriebsmodus, in welchem das flüssige Lebensmittel der Getränkeausgabevorrichtung zugeführt wird, ist der Reinigungsmittelmischbehälter somit entfernt. In dem Reinigungsmodus zum Reinigen zumindest der Zuführeinheit ist der Reinigungsmittelmischbehälter hingegen an oder in der Zuführeinheit angeordnet. In dem Reinigungsmodus ist der Reinigungsmischbehälter derart an oder in der Zuführeinheit angeordnet, dass mittels der Reinigungsmittelpumpe aus dem Reinigungsmittelbehälter Reinigungsmittel dem Reinigungsmischbehälter zuführbar ist und, das Reinigungsmittel und/oder eine Reinigungsmischung mittels der Zuführleitung aus dem Reinigungsmischbehälter abführbar ist.

Die erfindungsgemäße Zuführeinheit weist somit den Vorteil auf, dass der Reinigungsmittelmischbehälter unabhängig von sonstigen Komponenten der Zuführeinheit ausgebildet sein kann und sich Lebensmittelausgabemodus und Reinigungsmodus für den Benutzer in einfacher Weise das Anordnen des Reinigungsmittelmischbehälters an oder in der Zuführeinheit unterscheiden. Hiermit wird somit die Bedienung der Zuführeinheit, insbesondere der Wechsel zwischen Reinigungsmodus und Lebensmittelausgabemodus für den Bediener vereinfacht und hierdurch Fehlerquellen verringert.

Das erfindungsgemäße Verfahren zum Reinigen mindestens einer Zuführeinheit zum Zuführen eines flüssigen Lebensmittels zur Getränkeausgabevorrichtung umfasst folgende Verfahrensschritte:
In einem Verfahrensschritt A erfolgen ein Anordnen eines Reinigungsmittelmischbehälters an oder in der Zuführeinheit und ein fluidleitendes Verbinden einer Zuführleitung der Zuführeinheit mit dem Reinigungsmittelmischbehälter.

In einem Verfahrensschritt B erfolgt ein Zuführen von mindestens einem Reinigungsmittel aus einem Reinigungsmittelbehälter in den Reinigungsmittelmischbehälter.

In einem Verfahrensschritt C erfolgt ein Abführen von Reinigungsmittel oder einer Reinigungsmittelmischung aus dem Reinigungsmittelmischbehälter über die Zuführleitung, um zumindest die Zuführeinheit zu reinigen.

Wesentlich ist, dass in einem Lebensmittelausgabemodus die Zuführleitung mit einem Lebensmittelbehälter fluidleitend verbunden wird und in einem Reinigungsmodus die Zuführleitung statt mit dem Lebensmittelbehälter mit dem Reinigungsmittelmischbehälter fluidleitend verbunden wird.

Auch das erfindungsgemäße Verfahren weist somit die zu der erfindungsgemäßen Vorrichtung genannten Vorteile auf, in dem insbesondere der Austausch des Lebensmittelbehälters durch den Reinigungsmittelmischbehälter und entsprechend fluidleitendes Verbinden der Zuführleitung statt mit dem Lebensmittelbehälter mit dem Reinigungsmittelmischbehälter für den Benutzer in einfacher Weise den Wechsel zwischen einem Lebensmittelausgabemodus und Reinigungsmodus kennzeichnet.

Der Reinigungsmodus umfasst hierbei ein Reinigen zumindest von Teilen der Zuführeinheit, indem zumindest die Zuführleitung und bevorzugt hiermit weitere fluidleitende verbundene Komponenten, wie beispielsweise eine Förderpumpe, gereinigt werden. Vorzugsweise ist die Reinigung hierbei in an sich bekannter Weise ausgebildet, indem weitere Komponenten, insbesondere auch Komponenten einer mit der Zuführeinheit verbundenen Getränkeausgabevorrichtung mittels des aus dem Reinigungsmittelmischbehälter geförderten Reinigungsmittel bzw. der Reinigungsmittelmischung gereinigt werden.

Im Folgenden wird für das aus dem Reinigungsmittelmischbehälter geförderte Reinigungsmittel der Begriff "Reinigungsmittel" verwendet, unabhängig davon, ob es sich um unverdünntes Reinigungsmittel handelt oder um eine Reinigungsmittelmischung, welche mit einem Verdünnungsmittel wie beispielsweise Wasser verdünnt ist.

Die erfindungsgemäße Zuführeinheit kann als Zuführeinheit zum Zuführen eines flüssigen Lebensmittel zu einer an sich vorbekannten Getränkeausgabevorrichtung ausgebildet sein. Bevorzugt ist die Zuführeinheit zum Zuführen eines flüssigen Lebensmittels zu einer als Kaffeemaschine, insbesondere bevorzugt als Kaffeevollautomat ausgebildeten Getränkeausgabevorrichtung ausgebildet. Ebenso liegt es im Rahmen der Erfindung, dass die Zuführeinheit zum Zuführen eines flüssigen Lebensmittels zu einer anders ausgebildeten Getränkeausgabevorrichtung, beispielsweise eine Getränkeausgaberichtung zum Ausgeben von alkoholischen oder nicht alkoholischen Getränken, insbesondere von so genannten Erfrischungsgetränken ("Softdrinks"), ausgebildet ist.

Das mittels der Zuführeinheit zugeführte flüssige Lebensmittel kann ein flüssiger Geschmacksstoff, wie beispielsweise ein Sirup sein. Insbesondere bei Ausgestaltung der Getränkeausgabevorrichtung als Kaffeemaschine ist die Zuführeinheit bevorzugt zum Zuführen von Milch als flüssiges Lebensmittel zu der als Kaffeemaschine ausgebildeten Getränkeausgabevorrichtung ausgebildet. Denn insbesondere die Verwendung von Milch in einer Zuführeinheit und/oder einer Getränkeausgabevorrichtung erfordert ein besonderes Maß an Hygiene und stellt somit hohe Anforderungen an einen Reinigungsvorgang.

Die Zuführeinheit kann in einer bevorzugten Ausführungsform als eigene Einheit zum Anordnen neben einer Getränkeabgabevorrichtung ausgebildet sein. Vorzugsweise weist die Zuführeinheit hierbei zumindest einen Lebensmittelausgabeanschluss zum fluidleitenden Verbinden mit einem Lebensmittelzuführanschluss der Getränkeabgabevorrichtung auf. Weiterhin ist hierbei die Zuführeinheit derart ausgebildet, dass das Lebensmittel über den Lebensmittelausgabeanschluss der Getränkeabgabevorrichtung zur Ausgabe, gegebenenfalls nach weiterer Verarbeitung wie beispielsweise Aufschäumen, zuführbar ist.

Weiter bevorzugt weist die Zuführeinheit hierbei einen Steueranschluss auf, der mit einem Steuerausgang der Getränkeabgabevorrichtung elektrisch leitend verbindbar ist, so dass Steuersignale der Ausgabevorrichtung zum Steuern von Komponenten der Zuführeinheit, insbesondere von Pumpen und Ventilen der Zuführeinheit, übertragen werden können und somit mittels der Getränkeabgabevorrichtung die Funktion der Zuführeinheit steuerbar ist, insbesondere die Zuführung des flüssigen Lebensmittels und/oder das Durchführen einer Reinigung.

In einer weiteren vorzugsweisen Ausführungsform ist die Zuführeinheit in die Getränkeabgabevorrichtung integriert. Die erfindungsgemäße Getränkeabgabevorrichtung gemäß diesem Ausführungsbeispiel umfasst somit eine erfindungsgemäße Zuführeinheit und/oder eine vorzugsweise Ausführungsform hiervon. Insbesondere ist in diesem Ausführungsbeispiel die Zuführeinheit bevorzugt in einem Gehäuse der Getränkeabgabevorrichtung angeordnet.

Wie zuvor bereits ausgeführt, ergibt sich für den Benutzer in einfacher Weise der Unterschied zwischen Lebensmittelausgabemodus und Reinigungsmodus, indem im Lebensmittelausgabemodus ein Lebensmittelbehälter an oder in der Zuführeinheit angeordnet und fluidleitend mit der Zuführleitung verbunden ist und indem Reinigungsmodus statt des Lebensmittelbehälters der Reinigungsmischbehälter an oder in der Zuführeinheit angeordnet und die Zuführleitung fluidleitend verbunden ist.

In einer vorzugsweisen Ausführungsform wird die Sicherheit durch Ausschließen weiterer Fehlerquellen dadurch erhöht, dass eine Überprüfung erfolgt, ob der Reinigungsmischbehälter an oder in der Zuführvorrichtung angeordnet ist. Entsprechend weist die Zuführeinheit in einer bevorzugten Ausführungsform einen Detektor zur Detektion des Reinigungsmittelmischbehälters auf.

Hierdurch ist es möglich, die Steuerung der Zuführeinheit abhängig von der Detektion des an oder in der Zuführeinheit angeordneten Reinigungsmischbehälters auszugestalten. Insbesondere kann bevorzugt ein Reinigungsvorgang blockiert werden, sofern kein Reinigungsmischbehälter detektiert wird, d. h. ein Reinigungsvorgang ist nur bei an oder in der Zuführvorrichtung angeordnetem Reinigungsmittelmischbehälter möglich.

Vorzugsweise weist die Zuführeinheit dabei eine Steuereinheit auf, welche derart zusammenwirkend mit dem vorgenannten Detektor zur Detektion des Reinigungsmittelmischbehälters ausgebildet ist, dass ein Reinigungsvorgang nur möglich ist, wenn der Reinigungsmischbehälter an/oder in der Zuführeinrichtung angeordnet ist.

Ebenso liegt es im Rahmen der Erfindung, dass die vorgenannte Steuereinheit in der Getränkeausgabevorrichtung angeordnet ist und die vorgenannten Steuerfunktionen übernimmt.

Die Detektion des Reinigungsmittelmischbehälters mittels des Detektors kann in an sich bekannter Weise erfolgen. Bevorzugt weist der Reinigungsmittelmischbehälter mindestens eine Codierung auf und der Detektor ist zur Detektion dieser Codierung ausgebildet. Insbesondere kann die Codierung als RFID-Codierung, Barcode-Codierung oder magnetische Codierung ausgebildet sein. Hierdurch kann in einfacher Weise sichergestellt werden, dass nur bei Anordnung des seitens des Herstellers für die Zuführeinheit vorgesehenen Reinigungsmittelmischbehälters der Reinigungsvorgang ausgeführt wird. Es wird insbesondere verhindert, dass der Benutzer einen anderen, nicht geeigneten Mischbehälter an oder in der Zuführeinheit zum Ausführen des Reinigungsvorgangs verwendet.

Ein weiterer Vorteil der erfindungsgemäßen Zuführeinheit ist, dass das Reinigungsmittel aus einem Reinigungsmittelbehälter zunächst in den Reinigungsmittelmischbehälter zugeführt wird und anschließend von diesem mittels der Zuführleitung zum Reinigen zumindest der Zuführeinheit verwendet wird. Hierdurch kann in einfacher Weise eine weitere Vorbereitung des Reinigungsmittelmischbehälters erfolgen:
So kann in einfacher Weise der Benutzer ein Verdünnungsmittel, insbesondere Wasser, in den Reinigungsmittelmischbehälter füllen und diesen anschließend, wie zuvor beschrieben, an oder in der Zuführeinheit anordnen. Hierdurch kann in einfacher Weise ein Verdünnen des Reinigungsmittels erzielt werden.

Ein verdünnen des Reinigungsmittels aus dem Reinigungsmittelbehälter in dem Reinigungsmittelmischbehälter weist den Vorteil auf, dass das Reinigungsmittel in dem Reinigungsmittelbehälter als Konzentrat ausgeführt sein kann und somit weniger Volumen zu dessen Lagerung benötigt wird bzw. weniger häufig an ein Auffüllen oder Wechsel des Reinigungsmittelbehälters notwendig ist.

Vorzugsweise weist die Zuführeinheit einen Frischwasseranschluss auf und ist derart ausgebildet, dass in dem Reinigungsmodus Frischwasser wahlweise dem Reinigungsmittelmischbehälter zuführbar ist. In dieser bevorzugten Ausführungsform ist es somit nicht notwendig, dass der Benutzer seinerseits ein Verdünnungsmittel in den Reinigungsmittelmischbehälter füllt. Vielmehr kann, bevorzugt durch eine Steuereinheit der Zuführeinheit und/oder eine Steuereinheit der Getränkeausgabevorrichtung gesteuert, automatisch eine Verdünnung des aus dem Reinigungsmittelbehälter in den Reinigungsmittelmischbehälter zugeführten Reinigungsmittels durch Zuführen von Wasser erfolgen. Vorzugsweise ist die Zuführeinheit derart ausgebildet, dass wahlweise erwärmtes Wasser, insbesondere heißes Wasser, vorzugsweise Wasser mit einer Temperatur im Bereich 3 °C bis 70 °C, bevorzugt 30 °C bis 70 °C dem Reinigungsmischbehälter zuführbar ist. Durch das Vermischen des Reinigungsmittels aus dem Reinigungsmittelbehälter mit erwärmtem Wasser kann die Reinigungswirkung verbessert werden, so dass weniger Reinigungsmittel aus dem Reinigungsmittelbehälter benötigt wird.

Die Zuführeinheit weist vorzugsweise einen Aufnahmeraum für den Lebensmittelbehälter auf. Hierdurch ist eine geschützte Lagerung des Lebensmittelbehälters möglich. Insbesondere kann in einer weiteren vorzugsweisen Ausführungsform der Aufnahmeraum als Kühlraum ausgebildet sein, um hierdurch die Haltbarkeit des Lebensmittels zu erhöhen, insbesondere bei Verwendung von Milch.

Reinigungsmittelmischbehälter und Aufnahmeraum sind daher vorzugsweise derart ausgebildet, dass in dem Reinigungsmodus der Reinigungsmischbehälter anstelle des Lebensmittelbehälters in dem Aufnahmeraum anordbar ist. Insbesondere weist in einer weiteren vorzugsweisen Ausführungsform, wie zuvor beschrieben, der Aufnahmeraum einen Detektor auf, der derart angeordnet und mit dem Reinigungsmittelmischbehälter zusammenwirkend ausgebildet ist, dass nur bei Anordnen des Reinigungsmittelmischbehälters in dem Aufnahmeraum eine Detektion des Aufnahmereinigungsmischbehälters durch den Detektor erfolgt. Vorzugsweise ist der Detektor hierbei ausgebildet angeordnet, dass nur bei korrekter Positionierung des Reinigungsmittelmischbehälters in dem Aufnahmeraum eine Detektion erfolgt.

Die erfindungsgemäße Zuführeinheit weist den Vorteil auf, dass durch den Benutzer lediglich der Reinigungsmittelmischbehälter an oder in der Zuführeinheit angeordnet werden muss. Erfindungsgemäß ist daher die Reinigungsmittelpumpe zum Fördern des Reinigungsmittels an oder in der Zuführeinheit und insbesondere separat zu dem Reinigungsmittelmischbehälter angeordnet. Weiterhin weist die Zuführeinheit vorzugsweise einen separaten Aufnahmeraum für den Reinigungsmittelbehälter auf.

Ein typischer Reinigungsvorgang erfordert somit lediglich, dass der Benutzer anstelle des Lebensmittelbehälters den Reinigungsmittelmischbehälter an oder in der Zuführeinheit anordnet, die Zuführleitung fluidleitend mit dem Reinigungsmittelmischbehälter verbindet und gegebenenfalls das Reinigungsprogramm startet. Sofern wie zuvor ausgeführt, ein Detektor der Detektion des Reinigungsmittelmischbehälters vorgesehen ist, kann in einer weiter bevorzugten Ausführungsform der Reinigungsvorgang automatisch nach Anordnen des Reinigungsmittelmischbehälters und Detektion desselben mittels des Detektors starten.

Während der Reinigungsmittelmischbehälter im Lebensmittelausgabemodus, also nach Abschluss des Reinigungsvorgangs, wieder aus dem betreffenden Aufnahmeraum bzw. Kühlraum herausgenommen und durch einen Lebensmittelbehälter, beispielsweise einen klassischen Milchkarton, ersetzt wird, verbleibt der Reinigungsmittelbehälter in seinem separaten Aufnahmeraum in der Zuführeinheit und braucht lediglich nach vollständigem Verbrauch des Reinigungsmittels erneuert oder aufgefüllt zu werden.

Da als Reinigungsmittel, wie zuvor beschrieben, Reinigungsmittelkonzentrat verwendet werden kann, ist ein Auffüllen bzw. ein Wechseln des Reinigungsmittelbehälters nur selten notwendig, so dass bei der überwiegenden Mehrzahl der Reinigungsvorgänge der Benutzer lediglich den Reinigungsmittelmischbehälter handhaben muss.

Hierdurch ergibt sich weiterhin der Vorteil, dass der Reinigungsmittelmischbehälter bevorzugt ohne technische Komponenten, wie beispielsweise Pumpen, insbesondere ohne separate Leitungen ausgebildet ist, so dass der Reinigungsmittelmischbehälter in einfacher Weise beispielsweise in einer Spülmaschine gereinigt werden kann. Darüber hinaus ist durch Entfernen des Lebensmittelbehälters und Ersetzen durch den Reinigungsmischbehälter sichergestellt, dass kein Reinigungsmittel in den Lebensmittelbehälter gelangt.

Sofern ein gekühlter Aufnahmeraum, wie zuvor beschrieben, für den Lebensmittelbehälter vorgesehen ist, ist die Zuführeinheit bevorzugt derart ausgebildet, dass der Reinigungsmittelbehälter außerhalb des gekühlten Bereiches der Zuführeinheit angeordnet ist, um unnötige Energieaufnahme zum Kühlen des Reinigungsmittels zu verhindern und um die Reinigungswirkung des Reinigungsmittels, welche typischerweise mit sinkender Temperatur abnimmt, zu optimieren.

Die Zuführeinheit weist vorzugsweise in an sich bekannter Weise eine Zuführpumpe auf, welche saugseitig mit der Zuführleitung verbunden ist. Druckseitig kann die Zuführpumpe in an sich bekannter Weise mit weiteren Komponenten der Zuführeinheit und/oder Getränkeausgabevorrichtung verbunden sein, so dass beispielsweise ein Ausgeben des Lebensmittels, welches mittels der Zuführpumpe über die Zuführleitung auf dem Lebensmittelbehälter angesaugt wird, aus einer Ausgabeöffnung der Getränkeausgabevorrichtung möglich ist, gegebenenfalls nach Aufbereitung des Lebensmittels, wie beispielsweise Aufschäumen.

Die fluidleitende Verbindung zwischen Reinigungsmittelmischbehälter und Zuführleitung kann in an sich bekannter Weise erfolgen: So liegt es im Rahmen der Erfindung, dass die Zuführleitung flexibel, insbesondere als flexibler Schlauch ausgebildet ist und von dem Benutzer über eine an einer Oberseite des Reinigungsmittelmischbehälters vorgesehene Öffnung in den Reinigungsmittelmischbehälter eingeführt wird. Insbesondere ist bevorzugt der Reinigungsmittelmischbehälter als nach oben offener Behälter ausgebildet. Ebenso liegt es im Rahmen der Erfindung, dass der Reinigungsmittelmischbehälter einen Anschluss aufweist, welcher bei Anordnen des Reinigungsmittelmischbehälters an oder in der Zuführeinheit automatisch mit einem korrespondierenden fest an der Zuführeinheit angeordneten Anschluss der Zuführleitung fluidleitend verbunden wird.

In einer weiteren vorzugsweisen Ausführungsform des erfindungsgemäßen Verfahrens wird eine Wartezeit oder einer Startzeit vorgegeben und die Reinigung erfolgt erst nach Ablauf der Wartezeit bzw. zu der vorgegebenen Startzeit. Hierdurch kann in einfacher Weise die Reinigung automatisiert erfolgen, insbesondere zu einem Zeitpunkt, an welchem keine Störung des Benutzers durch die Reinigung erfolgt. Insbesondere kann hierdurch in einfacher Weise eine Reinigung beispielsweise in der Nacht erfolgen.

Weitere bevorzugten Merkmale und bevorzugte Ausführungsformen werden im Folgenden anhand von Ausführungsbeispielen und den Figuren erläutert. Dabei zeigt:
- Figur 1: in Teilbild a) ein erstes Ausführungsbeispiel einer erfindungsgemäßen Zuführeinheit zum Anordnen neben einer Getränkeausgabevorrichtung mit eingesetztem Lebensmittelbehälter und in Teilbild b) mit eingesetztem Reinigungsmittelmischbehälter und
- Figur 2: ein zweites Ausführungsbeispiel einer erfindungsgemäßen Zuführeinheit, welche in eine Getränkeausgabevorrichtung integriert ist.

Die Figuren stellen schematische, nicht maßstabsgetreue Ansichten dar, bei welchen zur einfacheren Darstellbarkeit an sich bekannte Komponenten weggelassen wurden. Gleiche Bezugszeichen in den Figuren bezeichnen gleiche oder gleichwirkende Elemente.

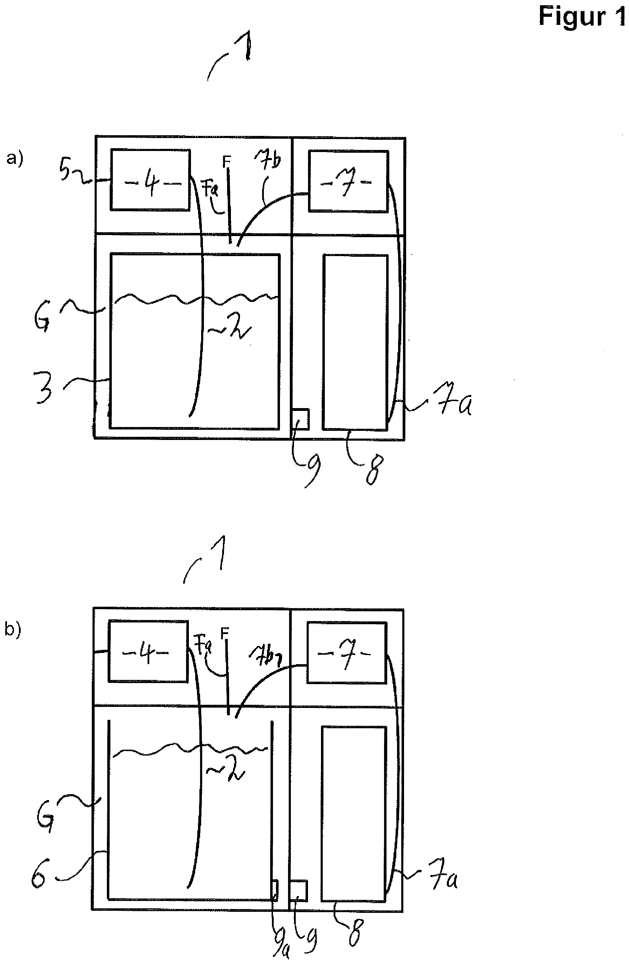

Das in Figur 1a) dargestellte erste Ausführungsbeispiel einer Zuführeinheit 1 weist eine Zuführleitung 2 auf, zum Zuführen eines flüssigen Lebensmittels - vorliegend Milch - aus einem Lebensmittelbehälter 3.

Der Lebensmittelbehälter 3 ist hierbei in einem gekühlten Bereich G der Zuführeinheit 1 angeordnet. Mittels einer Zuführpumpe 4, welche saugseitig mit der Zuführleitung 3 verbunden ist, kann somit Milch aus dem Lebensmittelbehälter 3 an einen Lebensmittelausgabeanschluss 5 geleitet werden. Dieser Lebensmittelausgabeanschluss 5 ist im Betrieb mit einem Lebensmitteleingangsanschluss einer (nicht dargestellten) Getränkeausgabevorrichtung, vorliegend eines Kaffeevollautomaten, fluidleitend verbunden. Zum Erzeugen eines Kaffee-Milch-Mischgetränks wird somit mittels der Getränkeausgabevorrichtung Kaffee erzeugt und durch Abgabe von Steuersignalen einer Steuereinheit der Getränkeausgabevorrichtung über eine (nicht dargestellte) Steuerschnittstelle an die Zuführeinheit die Zuführpumpe 4 derart gesteuert, dass Milch auf dem Lebensmittelbehälter 3 in gewünschter Menge über den Lebensmittelausgabeanschluss 5 der Getränkeausgabevorrichtung zugeführt wird.

Die Zuführleitung 2 ist hierbei über eine nicht dargestellte Öffnung an einer Oberseite des Lebensmittelbehälters 3 in den Lebensmittelbehälter eingeführt.

Figur 1a stellt somit den typischen Betriebszustand dar, in welchem flüssiges Lebensmittel aus dem Lebensmittelbehälter 3 der Getränkeausgabevorrichtung zuführbar ist. Es ist somit ein Lebensmittelausgabemodus dargestellt.

In Figur 1b ist ein Reinigungsmodus der Zuführeinheit 1 dargestellt. Hierbei ist der Lebensmittelbehälter 3 durch einen Reinigungsmittelmischbehälter 3 ersetzt.

Der Reinigungsmittelbehälter 6 ist oben offen ausgebildet, so dass zum einen die Zuführleitung 2 in den Reinigungsmittelmischbehälter 6 eingeführt werden kann, wie in Figur 1b dargestellt. Darüber hinaus weist die Zuführeinheit eine Reinigungsmittelpumpe 7 auf, welche über eine Schlauchleitung 7a saugseitig mit einem Reinigungsmittelbehälter 8 fluidleitend verbunden ist. Druckseitig ist die Reinigungsmittelpumpe 7 mit einer weiteren Schlauchleitung 7b fluidleitend verbunden, welche in einem Bereich über dem Reinigungsmittelmischbehälter endet, so dass bei eingesetztem Reinigungsmittelmischbehälter Reinigungsmittel aus dem Reinigungsmittelbehälter 8 mittels der Reinigungsmittelpumpe 7 in den Reinigungsmittelmischbehälter 6 gefördert werden kann.

Die Zuführeinheit weist weiterhin einen Festwasseranschluss F auf, welcher fluidleitend mit einer Schlauchleitung FA verbunden ist, welche ebenfalls über dem Reinigungsmittelmischbehälter 6 endet, so dass bei eingesetztem Reinigungsmittelmischbehälter 6 diesem Frischwasser zugeführt werden kann.

Nicht dargestellt sind insbesondere Steuerelemente zum elektrischen Ansteuern der Pumpen 4 und 7 sowie steuerbare Ventilelemente, zum wahlweisen Öffnen oder Schließen der fluidleitenden Verbindung zwischen Frischwasseranschluss F und Schlauchleitung FA.

Die Zuführeinheit 1 weist weiterhin einen Detektor 9 auf, welcher im nicht gekühlten Bereich der Zuführeinheit 1 angeordnet ist. Entsprechend weist der Reinigungsmittelmischbehälter 6 eine als RFID-Codierung ausgebildete Codierung 9a auf, welche derart in einem unteren Bereich an einer Außenseite des Reinigungsmittelmischbehälters 6 angeordnet ist, dass bei eingesetztem Reinigungsmittelmischbehälter 6 sich die Codierung 9a in geringem Abstand (vorliegend etwa 3 cm) zu dem Detektor 9 befindet. Hierdurch kann somit mittels einer nicht dargestellten Steuereinheit detektiert werden, ob der Reinigungsmittelmischbehälter 6 in der Zuführeinheit 1 angeordnet ist.

Zum Ausführen eines Ausführungsbeispiels eines erfindungsgemäßen Verfahrens wird somit anstelle des Lebensmittelbehälters 3 der Reinigungsmittelmischbehälter 6 in der Zuführeinheit 1 angeordnet. Sobald mittels des Detektors 9 die Codierung 9a erkannt wird, wird automatisch mittels der Reinigungsmittelpumpe 7 Reinigungsmittel aus dem Reinigungsmittelbehälter 8 in den Reinigungsmittelmischbehälter 6 gefördert und Wasser mittels des Festwasseranschlusses F hinzugegeben.

Bei dem Reinigungsmittel in dem Reinigungsmittelbehälter 8 handelt es sich um flüssiges, konzentriertes Reinigungsmittel, so dass nach Zugabe von Wasser eine gewünschte Reinigungsmittelkonzentration erzielt werden kann.

Nach Mischen des Reinigungsmittel in dem Reinigungsmittelmischbehälter 6 mit Wasser wird mittels der Zuführpumpe 4 die Reinigungsmittelmischung über die Zuführleitung 2 dem Lebensmittelausgabeanschluss 5 zugeführt, so dass einerseits Zuführleitung 2 und Zuführpumpe 4 gereinigt werden, darüber hinaus jedoch auch zusätzliche Leitungen und weitere Komponenten der nicht dargestellten Getränkeausgabevorrichtung.

Figur 1a stellt somit den Lebensmittelausgabemodus dar, in welchem die Zuführleitung 2 fluidleitend mit dem Lebensmittelbehälter 3 verbunden ist und Figur 1b stellt den Reinigungsmodus dar, in welchem die Zuführleitung 2 fluidleitend mit dem Reinigungsmittelmischbehälter 6 verbunden ist.

In einem weiteren Ausführungsbeispiel ist in der Leitung Fa ein (nicht dargestellter) Durchlauferhitzer angeordnet, so dass das Reinigungsmittel mit heißem Wasser mit einer Temperatur von 50 °C vermischt werden kann, um die Reinigungswirkung zu erhöhen.

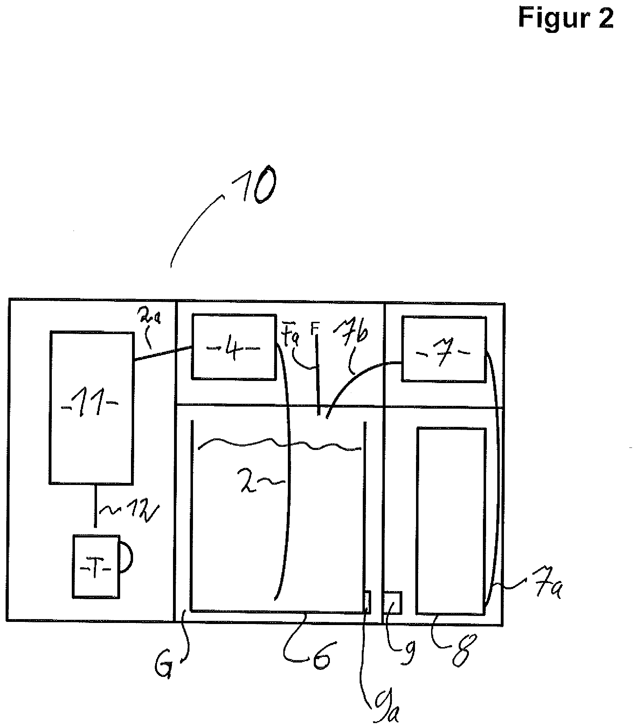

Figur 2 zeigt ein zweites Ausführungsbeispiel, bei welchem die Zuführeinheit in eine Getränkeausgabevorrichtung 10 integriert ist. Zum Vermeiden von Wiederholungen wird hier nur auf die Unterschiede zu der Darstellung gemäß Figur 1b eingegangen:
Die Getränkeabgabevorrichtung 10 weist eine Kaffeeeinheit 11 zum vollautomatischen Erzeugen von Kaffee auf, sowie eine nicht dargestellte Steuereinheit.

Sofern in einem nicht dargestellten Lebensmittelausgabemodus anstelle des Reinigungsmittelmischbehälters 6 ein Lebensmittelbehälter 3 mit Milch eingesetzt und fluidleitend mit der Zuführleitung 2 verbunden ist, kann somit in an sich bekannter Weise ein Kaffee-Milch-Mischgetränk, wie beispielsweise Latte Macchiato hergestellt und an eine Tasse T über einen Auslass 12 der Getränkeausgabevorrichtung 10 ausgegeben werden.

Wesentlich ist, dass die Getränkeausgabevorrichtung 10 eine Zuführeinheit umfasst, welche in einem gemeinsamen Gehäuse der Getränkeausgabevorrichtung 10 angeordnet ist und analog zu der in den Figuren 1a und 1b dargestellten Zuführeinheit ausgebildet ist.

In Figur 2 ist der Reinigungsmodus der Getränkeausgabevorrichtung 10 dargestellt: Ein nicht dargestellter Lebensmittelbehälter 3 wurde durch den Reinigungsmittelmischbehälter 6 ersetzt. Mittels der Reinigungsmittelpumpe 7 wurde Reinigungsmittelkonzentrat auf dem Reinigungsmittelbehälter 8 in den Reinigungsmittelmischbehälter 6 gefördert und mit Wasser mittels des festen Wasseranschlusses F über die Leitung Fa verdünnt. Anschließend wird mittels der Zuführpumpe 4 das verdünnte Reinigungsmittel über die Zuführleitung 2 angesaugt und über eine weitere Leitung 2a der Kaffeeeinheit 11 zugeführt, so dass die Kaffeeeinheit 11 gereinigt wird.

## Patentansprüche

1. Zuführeinheit (1) zum Zuführen eines flüssigen Lebensmittels zu einer Getränkeausgabevorrichtung,
mit einer Zuführleitung (2) zum Zuführen des flüssigen Lebensmittels aus einem Lebensmittelbehälter (3) zu der Zuführeinheit (1) und einem Reinigungsmittelbehälter (3) für ein Reinigungsmittel sowie einer an oder in der Zuführeinheit angeordneten Reinigungsmittelpumpe (7) zum Fördern des Reinigungsmittels aus dem Reinigungsmittelbehälter (8),
**dadurch gekennzeichnet, dass**
die Zuführeinheit (1) einen von Reinigungsmittelbehälter (3) und Reinigungsmittelpumpe (7) separaten Reinigungsmittelmischbehälter (6) aufweist, welcher wahlweise in einem Reinigungsmodus an oder in der Zuführeinheit (1) anordbar und in einem Lebensmittelausgabemodus von der Zuführeinheit (1) entfernbar ist,
wobei in dem Reinigungsmodus Reinigungsmittel mittels der Reinigungsmittelpumpe (7) aus dem Reinigungsmittelbehälter (8) dem Reinigungsmittelmischbehälter (6) zuführbar ist und Reinigungsmittel und/oder eine Reinigungsmischung mittels der Zuführleitung (2) aus dem Reinigungsmittelmischbehälter (6) abführbar ist.

2. Zuführeinheit (1) nach Anspruch 1,
**dadurch gekennzeichnet,**
**dass** die Zuführeinheit (1) einen Detektor (9) zur Detektion des Reinigungsmittelmischbehälters (6) aufweist,
insbesondere, dass der Reinigungsmittelmischbehälter (6) mindestens eine Codierung aufweist und der Detektor (9) zur Detektion dieser Codierung ausgebildet ist, vorzugsweise, dass die Codierung (9a) als RFID-Codierung, BarCode-Codierung oder magnetische Codierung ausgebildet ist.

3. Zuführeinheit nach Anspruch 2,
**dadurch gekennzeichnet,**
**dass** die Zuführeinheit (1) eine Steuereinheit umfasst, welche ausgebildet ist, den Ablauf eines Reinigungsprogramms nur bei Detektion des Reinigungsmittelmischbehälters (6) freizugeben.

4. Zuführeinheit (1) nach einem der vorangegangenen Ansprüche,
**dadurch gekennzeichnet,**
**dass** die Zuführeinheit (1) einen Aufnahmeraum für den Lebensmittelbehälter (3) aufweist und Reinigungsmittelmischbehälter (6) und Aufnahmeraum derart ausgebildet sind, dass in dem Reinigungsmodus der Reinigungsmittelmischbehälter (6) anstelle des Lebensmittelbehälters (3) in dem Aufnahmeraum anordbar ist.

5. Zuführeinheit (1) nach einem der vorangegangenen Ansprüche,
**dadurch gekennzeichnet,**
**dass** die Zuführeinheit (1) einen Frischwasseranschluss aufweist und derart ausgebildet ist, dass in dem Reinigungsmodus Frischwasser wahlweise dem Reinigungsmittelmischbehälter (6) zuführbar ist.

6. Zuführeinheit (1) nach einem der vorangegangenen Ansprüche,
**dadurch gekennzeichnet,**
**dass** die Zufüreinheit (1) einen separaten Aufnahmeraum für den Reinigungsmittelbehälter (8) aufweist.

7. Zuführeinheit (1) nach einem der vorangegangenen Ansprüche,
**dadurch gekennzeichnet,**
**dass** die Zuführeinheit (1) eine Zuführpumpe (4) aufweist, welche saugseitig mit der Zuführleitung verbunden ist.

8. Zuführeinheit nach einem der vorangegangenen Ansprüche,
**dadurch gekennzeichnet,**
**dass** die Zuführeinheit (1) als eigene Einheit zum Anordnen neben einer Getränkeabgabevorrichtung (10) ausgebildet ist und zumindest einen Lebensmittelausgabeanschluss (5) zum fluidleitenden Verbinden mit einem Lebensmittelzuführanschluss der Getränkeabgabevorrichtung (10) aufweist, und dass die Zuführeinheit (1) derart ausgebildet ist, dass das fluide Lebensmittel über den Lebensmittelausgabeanschluss (5) der Getränkeabgabevorrichtung (10) zuführbar ist.

9. Getränkeabgabevorrichtung (10), insbesondere Kaffeevollautomat,
**dadurch gekennzeichnet,**
**dass** die Getränkeabgabevorrichtung (10) eine Zuführeinheit (1) gemäß einem der Ansprüche 1 bis 7 umfasst.

10. Verfahren zum Reinigen zumindest einer Zuführeinheit (1) zum Zuführen eines flüssigen Lebensmittels zu einer Getränkeausgabevorrichtung (10), folgende Verfahrensschritte umfassend:
A Anordnen eines Reinigungsmittelmischbehälters (6) an oder in der Zuführeinheit (1) und fluidleitendes Verbinden einer Zuführleitung (2) der Zuführeinheit (1) mit dem Reinigungsmittelmischbehälter (6);
B Zuführen von zumindest einem Reinigungsmittel aus einem Reinigungsmittelbehälter (8) in den Reinigungsmittelmischbehälter (6);
C Abführen von Reinigungsmittel oder einer Reinigungsmittelmischung aus dem Reinigungsmittelmischbehälter (6) über die Zuführleitung (2), um zumindest die Zuführeinheit (1) zu reinigen;
**dadurch gekennzeichnet,**
**dass** in einem Lebensmittelausgabemodus die Zuführleitung (2) mit einem Lebensmittelbehälter (3) fluidleitend verbunden wird und in einem Reinigungsmodus die Zuführleitung (2) statt mit dem Lebensmittelbehälter (3) mit dem Reinigungsmittelmischbehälter (6) fluidleitend verbunden wird.

11. Verfahren nach Anspruch 10,
**dadurch gekennzeichnet,**
**dass** vor Verfahrensschritt C eine Überprüfung erfolgt, ob der Reinigungsmittelmischbehälter (6) an oder in der Zuführvorrichtung (1) angeordnet ist, insbesondere, dass eine Codierung (9a) des Reinigungsmittelmischbehälters (6) überprüft wird und nur bei korrekter Codierung (9a) Verfahrensschritt C ausgeführt wird.

12. Verfahren nach einem der Ansprüche 10 bis 11,
**dadurch gekennzeichnet,**
**dass** das Reinigungsmittel in dem Reinigungsmittelmischbehälter (6) verdünnt wird, insbesondere durch Zuführen von heißem Wasser verdünnt wird.

13. Verfahren nach einem der Ansprüche 10 bis 12,
**dadurch gekennzeichnet,**
**dass** eine Wartezeit oder Startzeit vorgegeben wird und die Reinigung erst nach Ablauf der Wartezeit oder zu der Startzeit durchgeführt wird.

14. Verfahren nach einem der Ansprüche 10 bis 13,
**dadurch gekennzeichnet,**
**dass** in dem Lebensmittelausgabemodus der Lebensmittelbehälter (3) in einen Aufnahmeraum der Zuführeinheit (1) angeordnet wird und zum Reinigen der Reinigungsmittelmischbehälter (6) anstelle des Lebensmittelbehälters (3) in dem Aufnahmeraum angeordnet wird.

## Claims

1. Feed unit (1) for feeding a fluid foodstuff to a beverage dispensing device,
having a feed line (2) for feeding the fluid foodstuff from a foodstuff container (3) to the feed unit (1) and having a cleaning agent container (3) for a cleaning agent and also having a cleaning agent pump (7) arranged on or in the feed unit for conveying the cleaning agent out of the cleaning agent container (8),
**characterised in that**
the feed unit (1) has a cleaning agent mixing container (6) which is separate from the cleaning agent container (3) and cleaning agent pump (7) and which, optionally, in a cleaning mode is arrangeable on or in the feed unit (1) and in a foodstuff dispensing mode is removable from the feed unit (1),
wherein, in the cleaning mode, cleaning agent is arranged to be fed from the cleaning agent container (8) to the cleaning agent mixing container (6) by means of the cleaning agent pump (7) and cleaning agent and/or a cleaning mixture are arranged to be discharged from the cleaning agent mixing container (6) by means of the feed line (2).

2. Feed unit (1) according to claim 1,
**characterised in that**
the feed unit (1) has a detector (9) for detecting the cleaning agent mixing container (6);
especially, the cleaning agent mixing container (6) has at least one code and the detector (9) is configured to detect that code; preferably, the code (9a) is in the form of an RFID code, barcode or magnetic code.

3. Feed unit according to claim 2,
**characterised in that**
the feed unit (1) comprises a control unit which is configured to allow a cleaning programme to take place only on detection of the cleaning agent mixing container (6).

4. Feed unit (1) according to any one of the preceding claims,
**characterised in that**
the feed unit (1) has a receiving space for the foodstuff container (3), and the cleaning agent mixing container (6) and the receiving space are configured in such a way that in the cleaning mode the cleaning agent mixing container (6) is arrangeable in the receiving space instead of the foodstuff container (3).

5. Feed unit (1) according to any one of the preceding claims,
**characterised in that**
the feed unit (1) has a fresh water port and is configured in such a way that in the cleaning mode fresh water can optionally be fed to the cleaning agent mixing container (6).

6. Feed unit (1) according to any one of the preceding claims,
**characterised in that**
the feed unit (1) has a separate receiving space for the cleaning agent container (8).

7. Feed unit (1) according to any one of the preceding claims,
**characterised in that**
the feed unit (1) has a feed pump (4) which is connected at its suction side to the feed line.

8. Feed unit according to any one of the preceding claims,
**characterised in that**
the feed unit (1) is configured as an independent unit for arrangement next to a beverage dispensing device (10) and has at least one foodstuff dispensing port (5) for fluid-conducting connection to a foodstuff feed port of the beverage dispensing device (10), and the feed unit (1) is configured in such a way that the fluid foodstuff can be fed to the beverage dispensing device (10) via the foodstuff dispensing port (5).

9. Beverage dispensing device (10), especially a fully automatic coffee machine,
**characterised in that**
the beverage dispensing device (10) comprises a feed unit (1) according to any one of claims 1 to 7.

10. Method of cleaning at least one feed unit (1) for feeding a fluid foodstuff to a beverage dispensing device (10), comprising the following method steps:
A arrangement of a cleaning agent mixing container (6) on or in the feed unit (1) and fluid-conducting connection of a feed line (2) of the feed unit (1) to the cleaning agent mixing container (6);
B feeding of at least one cleaning agent from a cleaning agent container (8) to the cleaning agent mixing container (6);
C discharge of cleaning agent or a cleaning agent mixture from the cleaning agent mixing container (6) via the feed line (2) in order to clean at least the feed unit (1);
**characterised in that**
in a foodstuff dispensing mode, the feed line (2) is brought into fluid-conducting connection with a foodstuff container (3) and, in a cleaning mode, the feed line (2) is brought into fluid-conducting connection with the cleaning agent mixing container (6) instead of with the foodstuff container (3).

11. Method according to claim 10,
**characterised in that**
prior to method step C, a check is carried out to establish whether the cleaning agent mixing container (6) is arranged on or in the feed device (1); especially, a code (9a) of the cleaning agent mixing container (6) is checked and method step C is carried out only if the code (9a) is correct.

12. Method according to either one of claims 10 and 11,
**characterised in that**
the cleaning agent is diluted in the cleaning agent mixing container (6), dilution being carried out especially by supplying hot water.

13. Method according to any one of claims 10 to 12,
**characterised in that**
a waiting time or start time is specified and the cleaning is carried out only after the waiting time has elapsed or at the start time.

14. Method according to any one of claims 10 to 13,
**characterised in that**
in the foodstuff dispensing mode, the foodstuff container (3) is arranged in a receiving space of the feed unit (1) and, for cleaning, the cleaning agent mixing container (6) is arranged in the receiving space instead of the foodstuff container (3).

## Revendications

1. Unité d'alimentation (1) destinée à apporter un aliment liquide à un distributeur de boissons,
avec une conduite d'alimentation (2) destinée à apporter l'aliment liquide à l'unité d'alimentation (1) à partir d'un contenant d'aliment (3), et avec un contenant d'agent de nettoyage (8) pour un agent de nettoyage, ainsi qu'une pompe d'agent de nettoyage (7) disposée sur ou dans l'unité d'alimentation et destinée à acheminer l'agent de nettoyage à partir du contenant d'agent de nettoyage (8),
**caractérisée en ce que** l'unité d'alimentation (1) comprend un contenant (6) de mélange d'agent de nettoyage, qui est séparé du contenant d'aliment (3) et de la pompe d'agent de nettoyage (7) et qui, sélectivement, peut être placé sur ou dans l'unité d'alimentation (1) dans un mode de nettoyage et retiré de l'unité d'alimentation (1) dans un mode de distribution d'aliment,
sachant que, dans le mode de nettoyage, un agent de nettoyage peut être apporté au contenant (6) de mélange d'agent de nettoyage à partir du contenant d'agent de nettoyage (8) au moyen de la pompe d'agent de nettoyage (7), et l'agent de nettoyage et/ou un mélange de nettoyage peut être évacué du contenant (6) de mélange d'agent de nettoyage au moyen de la conduite d'alimentation (2).

2. Unité d'alimentation (1) selon la revendication 1, **caractérisée en ce que** l'unité d'alimentation (1) présente un détecteur (9) destiné à détecter le contenant (6) de mélange d'agent de nettoyage,
en particulier **en ce que** le contenant (6) de mélange d'agent de nettoyage présente au moins un codage et le détecteur (9) est conçu pour détecter ce codage, de préférence **en ce que** le codage (9a) est réalisé sous forme de codage RFID, de codage à code-barres ou de codage magnétique.

3. Unité d'alimentation selon la revendication 2, **caractérisée en ce que** l'unité d'alimentation (1) comprend une unité de commande qui est conçue pour déclencher le déroulement d'un programme de nettoyage uniquement lors de la détection du contenant (6) de mélange d'agent de nettoyage.

4. Unité d'alimentation (1) selon l'une des revendications précédentes, **caractérisée en ce que** l'unité d'alimentation (1) présente un espace récepteur pour le contenant d'aliment (3), et le contenant (6) de mélange d'agent de nettoyage et l'espace récepteur sont conçus de telle sorte que, dans le mode de nettoyage, le contenant (6) de mélange d'agent de nettoyage peut être disposé à la place du contenant d'aliment (3) dans l'espace récepteur.

5. Unité d'alimentation (1) selon l'une des revendications précédentes, **caractérisée en ce que** l'unité d'alimentation (1) présente un branchement d'eau fraîche et est conçue de telle sorte que, dans le mode de nettoyage, de l'eau fraîche peut être sélectivement apportée au contenant (6) de mélange d'agent de nettoyage.

6. Unité d'alimentation (1) selon l'une des revendications précédentes, **caractérisée en ce que** l'unité d'alimentation (1) présente un espace récepteur séparé pour le contenant d'agent de nettoyage (8).

7. Unité d'alimentation (1) selon l'une des revendications précédentes, **caractérisée en ce que** l'unité d'alimentation (1) présente une pompe d'alimentation (4) qui est reliée côté aspiration à la conduite d'alimentation.

8. Unité d'alimentation selon l'une des revendications précédentes, **caractérisée en ce que** l'unité d'alimentation (1) est réalisée sous la forme d'une unité indépendante à disposer à côté d'un distributeur de boissons (10) et présente au moins un branchement (5) de distribution d'aliment destiné à être fluidiquement relié à un branchement d'apport d'aliment du distributeur de boissons (10), et **en ce que** l'unité d'alimentation (1) est conçue de telle sorte que l'aliment fluide peut être apporté au distributeur de boissons (10) par l'intermédiaire du branchement (5) de distribution d'aliment.

9. Distributeur de boissons (10), en particulier machine à café automatique, **caractérisé en ce que** le distributeur de boissons (10) comprend une unité d'alimentation (1) selon l'une des revendications 1 à 7.

10. Procédé de nettoyage d'au moins une unité d'alimentation (1) destinée à apporter un aliment liquide à un distributeur de boissons (10), comprenant les étapes de procédé suivantes ;
A disposition d'un contenant (6) de mélange d'agent de nettoyage sur ou dans l'unité d'alimentation (1), et liaison fluidique d'une conduite d'alimentation (2) de l'unité d'alimentation (1) avec le contenant (6) de mélange d'agent de nettoyage ;
B apport d'au moins un agent de nettoyage au contenant (6) de mélange d'agent de nettoyage à partir d'un contenant d'agent de nettoyage (8) ;
C évacuation de l'agent de nettoyage ou d'un mélange d'agent de nettoyage du contenant (6) de mélange d'agent de nettoyage par l'intermédiaire de la conduite d'alimentation (2), afin de nettoyer au moins l'unité d'alimentation (1) ;
**caractérisé en ce que**, dans un mode de distribution d'aliment, la conduite d'alimentation (2) est fluidiquement reliée à un contenant d'aliment (3) et, dans un mode de nettoyage, la conduite d'alimentation (2) est fluidiquement reliée au contenant (6) de mélange d'agent de nettoyage au lieu du contenant d'aliment (3).

11. Procédé selon la revendication 10, **caractérisé en ce que**, avant l'étape de procédé C, on contrôle si le contenant (6) de mélange d'agent de nettoyage est disposé sur ou dans l'unité d'alimentation (1), en particulier **en ce qu'**on contrôle un codage (9a) du contenant (6) de mélange d'agent de nettoyage et on exécute l'étape de procédé C uniquement en cas de codage correct (9a).

12. Procédé selon l'une des revendications 10 à 11, **caractérisé en ce que** l'agent de nettoyage est dilué dans le contenant (6) de mélange d'agent de nettoyage, en particulier est dilué par apport d'eau chaude.

13. Procédé selon l'une des revendications 10 à 12, **caractérisé en ce qu'**on prédéfinit une durée d'attente ou un instant de démarrage, et le nettoyage n'est effectué qu'à l'expiration de la durée d'attente ou à l'instant de démarrage.

14. Procédé selon l'une des revendications 10 à 13, **caractérisé en ce que**, dans le mode de distribution d'aliment, le contenant d'aliment (3) est disposé dans un espace récepteur de l'unité d'alimentation (1) et, pour le nettoyage, le contenant (6) de mélange d'agent de nettoyage est disposé à la place du contenant d'aliment (3) dans l'espace récepteur.
